# EUROPÄISCHE PATENTSCHRIFT

(11) **EP 3 006 677 B1**
(45) Veröffentlichungstag und Bekanntmachung des Hinweises auf die Patenterteilung: **21.06.2017**
(21) Anmeldenummer: 15186107.7
(22) Anmeldetag: 21.09.2015
(51) Int. Cl.: F01D 11/02, F01D 11/04, F01D 3/04, F02C 7/06, F02C 7/28, F01D 25/16, F01D 25/18

(54) **GASTURBINE MIT WENIGSTENS ZWEI KOAXIAL ZUEINANDER ANGEORDNETEN UND ZUMINDEST BEREICHSWEISE ALS HOHLWELLEN AUSGEBILDETEN WELLEN**
GAS TURBINE WITH AT LEAST TWO COAXIALLY CONNECTED SHAFTS, WHICH ARE AT LEAST PARTIALLY HOLLOW
TURBINE A GAZ DOTEE D'AU MOINS DEUX ARBRES DISPOSES CO-AXIALEMENT L'UN PAR RAPPORT A L'AUTRE ET AU MOINS EN PARTIE COMME ARBRES CREUX

(30) Priorität: 06.10.2014 DE 102014114473
(43) Veröffentlichungstag der Anmeldung: 13.04.2016
(73) Patentinhaber: Rolls-Royce Deutschland Ltd & Co KG, 15827 Blankenfelde-Mahlow (DE)
(72) Erfinder: Venter, Gideon, 14165 Berlin (DE)
(74) Vertreter: Schmidt, Martin Michael

(56) Entgegenhaltungen:
- EP-A1- 1 626 164
- EP-A2- 2 050 932
- DE-A1-102009 054 007
- DE-A1-102011 122 109
- JP-A- 2009 019 609

## Beschreibung

Die Erfindung betrifft eine Gasturbine mit wenigstens zwei koaxial zueinander angeordneten und zumindest bereichsweise als Hohlwellen ausgebildeten Wellen gemäß der im Oberbegriff des Patentanspruches 1 näher definierten Art.

Bei aus der Praxis bekannten Gasturbinen mit zwei oder mehr Wellen werden aerodynamische Lasten im Bereich der Gehäusestruktur abgestützt. Insbesondere die im Bereich der Wellen wirkenden axialen Lasten werden bei als Flugtriebwerke ausgeführten Gasturbinen in entgegengesetzten Richtungen im Bereich von Lagereinrichtungen abgestützt. Die begrenzt zur Verfügung stehenden Bauräume und die hohen Drehzahlen der Wellen, insbesondere der Hochdruckwellen, begrenzen die Lasttragfähigkeit der diesen Wellen zugeordneten Hochdruckzentrierlager.

Um die axialen Lasten im Bereich dieser Lagereinrichtungen auf ein zulässiges Niveau reduzieren zu können, werden u.a. sogenannte Lastkolben vorgesehen, die mithilfe von Druckdifferenzen und hochwertigen Dichtungen zur Entlastungen der Lagereinrichtungen beitragen. Hierfür wird ein in einem Hochdruckbereich wirkender Hochdruck an einem solchen Lastkolben angelegt, wobei beispielsweise ein im Bereich einer Triebwerksstufe wirkender Druck angelegt wird. Um den einem Lastkolben zugeführten Luftstrom aus einer Triebwerksstufe gesteuert entnehmen zu können, ist jedoch wiederum ein entsprechender Dichtaufwand erforderlich.

Solche Dichteinrichtungen sind entweder sogenannte Labyrinthdichtungen oder sogenannte Bürstendichtungen, welche aus Karbon hergestellt sind. Meist sind solche Dichtungen als berührungslose Dichtungen ausgeführt, um Verschleiß und Wärmeentwicklung im Dichtbereich zu vermeiden, wobei berührungslose Dichtungen nachteilhafterweise durch eine gewisse Leckagerate gekennzeichnet sind.

Der Einsatz spezieller Lastkolben zum Reduzieren der einzelnen resultierenden axialen Lagerlasten verursacht einen größeren Dichtdurchmesser mit damit korrespondierender Leckage über zugeordnete Dichteinrichtungen, was jedoch den Triebwerkstreibstoffverbrauch erhöht und einen Bauraumbedarf vergrößert. Zusätzlich ist jedem Lager ein separater Lastkolben zur Lagerlastreduzierung zuzuordnen, was wiederum den Bauraumbedarf einer Gasturbine bzw. eines Lufttriebwerkes vergrößert.

Da die Temperatur des Arbeitsfluides in einer Gasturbine mit dem Druck bekannterweise ansteigt und die Leckage heißer Luft die Materialeigenschaften von verwendetem Öl und auch die Öltemperaturen beeinflusst bzw. verändert, sind beim Einsatz von Lastkolben zusätzliche Kühlmaßnahmen vorzusehen, die wiederum einen Anstieg des Gesamtgewichtes einer Gasturbine verursachen.

Aufgrund der Lastkolben zugrunde liegenden Nachteile werden Lagereinrichtungen von Gasturbinen bzw. Lufttriebwerken umständehalber bei hohen Lasten betrieben und sind daher nach kurzen Betriebszeiten zur Vermeidung eines Funktionsausfalles innerhalb eines Serviceintervalls auszutauschen, woraus wiederum jedoch eine Erhöhung der Wartungs- und Betriebskosten resultiert.

Sind die Lagereinrichtungen der verschiedenen Wellen in einer gemeinsamen Lagerkammer angeordnet, werden sogenannte Zwischenwellendichtungen vorgesehen, um den Eintritt von heißen Gasen in die Lagerkammer und eine Ölleckage ausgehend von der Lagerkammer in Richtung heißer Triebwerksbereiche, in welchen Öl aufgrund der hohen Temperaturen entzündet wird, zu vermeiden. Derartige Zwischenwellendichtungen werden in Gasturbinen bzw. Lufttriebwerken mit gleichlaufenden Wellen als hydraulische Zwischenwellendichtungen ausgeführt. Eine solche Dichtung ist beispielsweise aus der DE 10 2009 054 007 A1 bekannt.

Zwischenwellendichteinrichtungen trennen einen ersten innerhalb zumindest einer der Wellen vorgesehenen und von den Wellen begrenzten Bereich gegenüber einem außerhalb der Wellen vorgesehenen Bereich, wobei im von den Wellen begrenzten Bereich ein von dem Bereich außerhalb der Wellen wirkenden Betriebsdruck abweichender Betriebsdruck vorliegt. Die Zwischenwellendichteinrichtungen weisen jeweils ein mit einer ersten Welle verbundenes Dichtelement auf, das sich über den Umfang der ersten Welle erstreckt sowie einen Innennutbereich mit definierter Nuttiefe umfasst, in den ein weiteres Dichtelement radial eingreift, das mit der zweiten Welle verbunden ist. Der Betriebsdruck liegt in dem von den Wellen begrenzten Bereich in axialer Richtung der Wellen an einander zugewandten Wirkflächen der Dichtelemente an, während der im Bereich außerhalb der Wellen vorliegende Druck in axialer Richtung an zueinander abgewandten Wirkflächen der Dichtelemente angreift.

Bei Lufttriebwerken wird der Zwischenwellenbereich bzw. der Bereich innerhalb der Wellen mit einem höheren Druck beaufschlagt als der Bereich außerhalb der Wellen, der meist eine Lagerkammer ist. Damit ist gewährleistet, dass bei einem Ausfall der Dichtwirkung einer Zwischenwellendichtung Leckage in Richtung der Lagerkammer strömt und ein Ölverlust ausgehend von der Lagerkammer in Richtung eines Hochdruckbereiches verhindert ist.

Aus der DE 10 2011 122 109 A1 ist eine Dichtungsvorrichtung mit einer hydraulischen Dichtung bekannt, mittels der zwischen zwei Hohlwellen abdichtbar ist. Die mit einem Teil jeweils an den Hohlwellen angeordnete hydraulische Dichtung weist eine rotationssymmetrische Nut auf, in die zwei rotationssymmetrische Fluidleitelemente eingreifen.

Der vorliegenden Erfindung liegt daher die Aufgabe zugrunde, eine bauraum- und kostengünstige Gasturbine zur Verfügung zu stellen, die zudem durch einen geringen Wartungsaufwand gekennzeichnet ist.

Erfindungsgemäß wird diese Aufgabe mit einer Gasturbine mit den Merkmalen des Patentanspruches 1 gelöst.

Die erfindungsgemäße Gasturbine, die insbesondere ein Lufttriebwerk sein kann, weist wenigstens zwei koaxial zueinander angeordnete und zumindest bereichsweise als Hohlwellen ausgebildete Wellen auf, die über Lagereinrichtungen im Bereich eines Gehäuses drehbar gelagert sind. Zwischen den Lagereinrichtungen der Wellen ist eine hydraulische Zwischenwellendichteinrichtung angeordnet, die einen ersten innerhalb zumindest einer der Wellen vorgesehenen und von den Wellen begrenzten Bereich gegenüber einem außerhalb der Wellen vorgesehen Bereich trennt. Im von den Wellen begrenzten Bereich liegt ein von im Bereich außerhalb der Wellen wirkenden Betriebsdruck abweichender Betriebsdruck vor. Die Zwischenwellendichteinrichtung umfasst ein mit einer ersten Welle verbundenes Dichtelement, das sich über den Umfang der ersten Welle erstreckt und einen Innennutbereich mit definierter Nuttiefe aufweist, in den ein weiteres Dichtelement radial eingreift, das mit der zweiten Welle verbunden ist. Der Betriebsdruck in dem von den Wellen begrenzten Bereich liegt in axialer Richtung der Wellen an einander zugewandten Wirkflächen der Dichtelemente an, während der im Bereich außerhalb der Wellen vorliegende Druck in axialer Richtung an zueinander abgewandten Wirkflächen der Dichtelemente angreift.

Erfindungsgemäß ist ein Verhältnis zwischen die einander zugewandten Wirkflächen begrenzenden Außendurchmessern und diese Wirkflächen begrenzenden Innendurchmessern jeweils größer gleich 1,25.

Mit dem erfindungsgemäßen Durchmesserverhältnis liegen im Bereich einer Zwischenwellendichteinrichtung auf kosten- und bauraumgünstige Art und Weise entsprechend groß dimensionierte Oberflächen bzw. Stirnflächen vor, an welchen der im von den Wellen begrenzten Bereich wirkende Betriebsdruck derart anliegt, dass über den Betriebsdruck im von den Wellen begrenzten Bereich jeweils axiale Kräfte in die Wellen eingeleitet werden, die den im Bereich der Lagereinrichtungen wirkenden Axiallagerkräften entgegengerichtet sind und die im Betrieb die im Bereich der Lagereinrichtungen angreifenden Axialkräfte reduzieren. Über die im Bereich der Zwischenwellendichteinrichtung generierten axialen Druckkräfte sind axiale Lagerkräfte der Wellen zumindest teilweise kompensierbar und Lagereinrichtungen mit längeren Wartungsintervallen betreibbar.

Ist ein Nutgrund des Innennutbereiches in radialer Richtung beabstandet zum radial äußeren Bereich des weiteren Dichtelementes vorgesehen, sind der von den Wellen begrenzte Bereich und der außerhalb der Wellen vorgesehene Bereich im Betrieb der Gasturbine mit geringen Verlusten über die Zwischenwellendichteinrichtung voneinander trennbar bzw. gegeneinander abdichtbar.

Taucht der radial äußere Bereich des weiteren Dichtelementes im Betrieb der Gasturbine im Innennutbereich des Dichtelementes in ein definiertes Ölvolumen ein, ist eine Leckage zwischen dem von den Wellen begrenzten Bereich und dem Bereich außerhalb der Wellen im Wesentlichen gleich 0, ohne im Bereich der Zwischenwellendichteinrichtung hohe Verlustleistungen zu erzeugen oder einen unerwünscht hohen Verschleiß zu verursachen.

Bei einer konstruktiv einfachen und kostengünstigen sowie durch eine hohe Dichtwirkung gekennzeichneten Weiterbildung der erfindungsgemäßen Gasturbine ist das weitere Dichtelement wenigstens bereichsweise ringscheibenförmig ausgebildet.

Sind die Lagereinrichtungen in einer Lagerkammer angeordnet, die dem Bereich außerhalb der Wellen entspricht, ist ein Eindringen von Öl ausgehend vom Bereich außerhalb der Wellen in Richtung des von den Wellen begrenzten Bereiches in gewünschtem Umfang vermieden.

Ist zwischen den Wellen ein Kolbenring vorgesehen, der im Stillstand der Wellen den Bereich außerhalb der Wellen und den von den Wellen begrenzten Bereich auf der dem von den Wellen begrenzten Bereich zugewandten Seite der Zwischenwellendichteinrichtung trennt, ist ein Eindringen von Öl in den von den Wellen begrenzten Bereich auch im Stillstand der Gasturbine auf konstruktiv einfache Art und Weise vermieden.

Bei einer weiteren vorteilhaften Ausführungsform der Gasturbine laufen die Wellen mit gleicher Drehrichtung um, womit Differenzdrehzahlen zwischen dem Dichtelement und dem weiteren Dichtelement bzw. zwischen den Wellen geringer als bei gegenläufig betriebenen Wellen sind und Verlustleistungen und ein Verschleiß im Bereich der Zwischenwellendichteinrichtung niedrig sind.

Im Einzelnen bezieht sich die Erfindung auf eine Gasturbine in zwei-, drei- oder mehrwelliger Ausgestaltung, wobei die Gasturbine insbesondere in Form einer Fluggasturbine oder eines Strahltriebwerks bzw. eines Flugtriebwerks ausgebildet sein kann.

Sowohl die in den Patentansprüchen angegebenen Merkmale als auch die im nachfolgenden Ausführungsbeispiel der erfindungsgemäßen Gasturbine angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Gegenstandes ergeben sich aus den Patentansprüchen und aus dem nachfolgend unter Bezugnahme auf die Zeichnung prinzipmäßig beschriebenen Ausführungsbeispiel.

Die einzige Figur der Zeichnung zeigt eine schematisierte Teillängsschnittansicht eines Ausführungsbeispiels der erfindungsgemäßen Gasturbine.

Die Figur zeigt eine Teillängsschnittansicht einer als Flugtriebwerk ausgebildeten Gasturbine 1 mit zwei koaxial zueinander angeordneten und zumindest bereichsweise als Hohlwellen ausgebildeten Wellen 2, 3, die über Lagereinrichtungen 4, 5 im Bereich eines Gehäuses 6 drehbar gelagert sind. Zwischen den Lagereinrichtungen 4, 5 der Wellen 2, 3 ist eine hydraulische Zwischenwellendichteinrichtung 7 angeordnet, die einen ersten innerhalb zumindest einer der Wellen 2 vorgesehenen und von den Wellen 2, 3 begrenzten Bereich 8 gegenüber einem außerhalb der Wellen vorgesehen Bereich 9 trennt, der vorliegend eine Lagerkammer der Lagereinrichtungen 4 und 5 darstellt.

Der im Bereich der Lagerkammer 9 im Betrieb wirkende Betriebsdruck ist kleiner als der in dem von den Wellen 2, 3 begrenzten Bereich 8 wirkende Betriebsdruck, womit gewährleistet ist, dass selbst bei einem Ausfall der Dichtwirkung im Bereich der Zwischenwellendichteinrichtung 7 ein Eintritt von Öl ausgehend von der Lagerkammer 9 in Richtung des Bereiches 8 unterbleibt. Der Bereich 8 steht mit dem Hochdruckbereich des Strahltriebwerkes 1 in Verbindung, in dessen Bereich im Betrieb des Strahltriebwerkes 1 derart hohe Betriebstemperaturen vorliegen, dass im Bereich 8 vorliegendes Öl entzündet wird, was jedoch unerwünscht ist.

Die Zwischenwellendichteinrichtung 7 umfasst ein mit der Welle 2 bzw. der Hochdruckwelle verbundenes Dichtelement 10, das sich über den Umfang der ersten Welle 2 erstreckt sowie einen Innennutbereich 11 mit definierter Nuttiefe t aufweist. In den Innennutbereich 11 greift radial ein weiteres Dichtelement 12 der Zwischenwellendichteinrichtung 7 ein, das mit der zweiten Welle 3 verbunden ist. Der Betriebsdruck in dem von den Wellen 2, 3 begrenzten Bereich 8 liegt in axialer Richtung der Wellen 2, 3 an einander zugewandten Wirkflächen 13, 14 der Dichtelemente 10, 12 an, während der im Bereich 9 außerhalb der Wellen 2, 3 vorliegende Druck in axialer Richtung an zueinander abgewandten Wirkflächen der Dichtelemente 10, 12 angreift.

Ein Nutgrund 17 des Innennutbereiches 11 ist in radialer Richtung beabstandet zum radial äußeren Bereich des weiteren Dichtelementes angeordnet. Um im Betrieb des Lufttriebwerkes 1 die Lagerkammer 9 vom Bereich 8 über die Zwischenwellendichteinrichtung 7 in gewünschtem Umfang dichtend trennen zu können, wird im Betrieb des Strahltriebwerks 1 in den Innennutbereich 11 ein ÖlVolumenstrom eingeleitet. In Abhängigkeit des Druckgefälles zwischen der Lagerkammer 9 und dem Bereich 8 und der Drehzahlen der gleichlaufenden Wellen 2 und 3 liegt im Innennutbereich 11 ohne weitere Maßnahmen ein definiertes Ölvolumen 21 vor, das dort durch die rotationsbedingt am Öl angreifende Fliehkraft bevorratet wird, wobei durch ein kontinuierliches Zuführen von Öl in den Innennutbereich 11 das dort vorhandene Ölvolumen stetig ausgetauscht wird und somit eine unerwünschte Erwärmung des Öls im Innennutbereich 11 vermieden wird.

In Abhängigkeit des Druckgefälles zwischen der Lagerkammer 9 und dem Bereich 8 stellt sich auf der der Lagereinrichtung 5 zugewandten Seite des Dichtelementes 12 im Innennutbereich 11 ein anderer Ölspiegel ein als auf der der Lagereinrichtung 4 zugewandten Seite des Dichtelementes 12. Dies resultiert aus der Tatsache, dass der Druck im Bereich 8 höher als im Bereich der Lagerkammer 9 ist.

Um eine entsprechend hohe Dichtwirkung zur Verfügung stellen zu können, ist das weitere Dichtelement 12 in seinem im Innennutbereich 11 angeordneten äußeren Randbereich 19 ringscheibenförmig ausgebildet und im Wesentlichen parallel zu den den Innennutbereich 11 begrenzenden Bereichen des ersten Dichtelements 10 verlaufend ausgebildet. Zusätzlich taucht das weitere Dichtelement 12 mit einem radial äußeren Bereich 18 des Randbereiches 19 im Betrieb der Gasturbine 1 im Innennutbereich 11 des Dichtelementes 10 in das definierte Ölvolumen 21 ein. Dadurch ist eine Leckage zwischen dem von den Wellen 2, 3 begrenzten Bereich 8 und dem Bereich 9 außerhalb der Wellen 2, 3 im Wesentlichen gleich 0, ohne im Bereich der Zwischenwellendichteinrichtung 7 hohe Verlustleistungen zu erzeugen oder einen unerwünscht hohen Verschleiß zu verursachen

Zusätzlich ist zwischen den Wellen 2 und 3 ein Kolbenring 20 vorgesehen, der im Stillstand der Wellen 2, 3 den Bereich bzw. die Lagerkammer 9 außerhalb der Wellen 2, 3 und den von den Wellen 2, 3 begrenzten Bereich 8 auf der von den Wellen 2, 3 begrenzten Bereich 8 zugewandten Seite der Zwischenwellendichteinrichtung trennt, um im Stillstand der Wellen 2, 3 ein Eindringen von Öl ausgehend von der Lagerkammer 9 in den Bereich 8 bei abgeschaltetem Flugtriebwerk 1 zu verhindern. Im Betrieb, d. h. bei drehenden Wellen 2, 3, hebt der Kolbenring 20 von der Welle 3 ab, womit der Kolbenring 20 dann nicht mehr an der Außenseite der Welle 3 anliegt und im Betrieb des Flugtriebwerkes 1 unerwünschte Verlustleistungen in diesem Bereich unterbleiben.

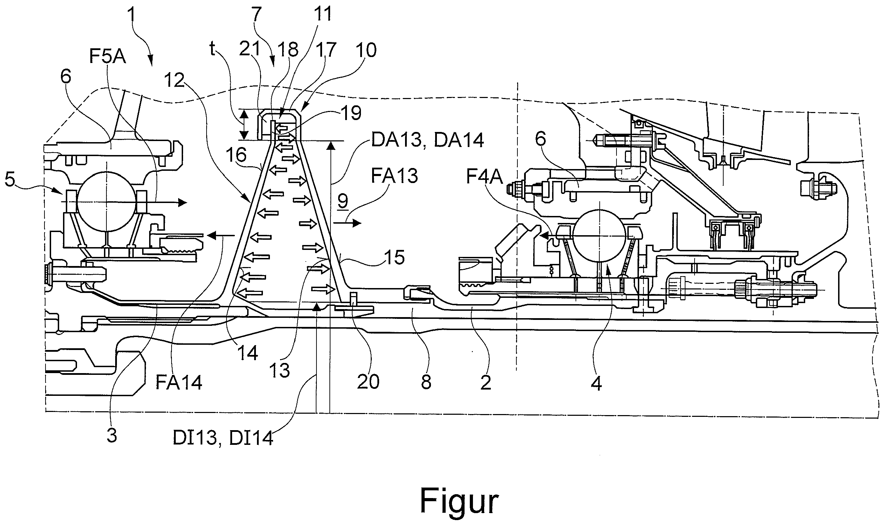

Die konstruktive Auslegung des Lufttriebwerkes 1 gemäß Fig. 1 ist derart, dass im Bereich der Lagereinrichtung 4, in dessen Bereich die Hochdruckwelle 2 drehbar gelagert ist, eine jeweils im aktuellen Betriebspunkt vorliegende Axialkraftkomponente F4A anliegt, die über die Lagereinrichtung 4 im Gehäuse 6 abzustützen ist und die in Richtung der Zwischenwellendichteinrichtung 7 im Bereich der Lagereinrichtung 4 angreift. Gleichzeitig wirkt im Bereich der Lagereinrichtung 5, in deren Bereich die Niederdruckwelle 3 drehbar gelagert ist, eine ebenfalls in Richtung der Zwischenwellendichteinrichtung 7 wirkende Axialkraftkomponente F5A. Die beiden Axialkraftkomponenten F4A und F5A sind diejenigen Axialkräfte, die sich aus allen an den Wellen 2 und 3 angreifenden Axialkräften zusammensetzen.

Um im Bereich der Lagereinrichtungen 4 und 5 unzulässig hohe und eine gewünscht hohe Lebensdauer der Lagereinrichtung 4, 5 beeinträchtigende resultierende Axialkraftkomponenten F4A, F5A zu vermeiden, ist ein Verhältnis zwischen die einander zugewandten Wirkflächen begrenzenden Außendurchmessern DA13 bzw. DA14 und diese Wirkflächen 13, 14 ebenfalls begrenzenden Innendurchmessern DI13, DI14 jeweils größer gleich 1,25. Dabei entsprechen die Innendurchmesser DI13 und DI14 der Wirkflächen 13 und 14 der Dichtelemente 10, 12 der Zwischenwellendichteinrichtung 7 bei dem vorliegend näher betrachteten Ausführungsbeispiel des Strahltriebwerks 1 im Wesentlichen Innendurchmessern im Bereich von Zwischenwellendichteinrichtungen herkömmlicher Flugtriebwerke, während die Außendurchmesser DA13 und DA14 der Wirkflächen 13 und 14 gegenüber herkömmlich ausgebildeten Flugtriebwerken im erfindungsgemäßen Umfang vergrößert sind. Damit ist die erfindungsgemäße Lösung mit geringem Umfang in bestehende Triebwerkskonzepte implementierbar, um im Bereich der Lagereinrichtung 4 und auch der Lagereinrichtung 5 aus dem jeweils im Bereich der Wirkflächen 13 und 14 anliegenden Druck des von den Wellen 2, 3 begrenzten Bereiches 8 jeweils resultierende Axialkräfte FA13 und FA14 anlegen zu können, die den resultierenden Axialkraftkomponenten F4A und F5A jeweils entgegenwirken und die Axiallagerbelastung im Bereich der Lagereinrichtungen 4 und 5 im gewünschten Umfang reduzieren.

In Abhängigkeit des jeweils vorliegenden Anwendungsfalles besteht jedoch auch die Möglichkeit, die Innendurchmesser DI13 und DI14 in anderer geeigneter Art und Weise auszulegen, um die vorbeschriebene Axiallagerkraftkompensation mit dem Durchmesserverhältnis größer gleich 1,25 vorzusehen.

Die Druckdifferenz zwischen dem Betriebsdruck in der Lagerkammer 9 und dem Betriebsdruck im Bereich 8 variiert über den Betriebsbereich des Strahltriebwerks 1 und unter anderem auch in Abhängigkeit der Flughöhe, der Fluggeschwindigkeit und dergleichen, was sich auch auf die Höhe der Axialkraftkomponenten FA13 und FA14 auswirkt. Grundsätzlich besteht jedoch die Möglichkeit, die Axialkraftkompensation im Bereich der Lagereinrichtungen 4 und 5 durch entsprechende Auslegung der Außendurchmesser DA13 und DA14 sowie der Innendurchmesser DI13 und DI14 und der jeweils im Bereich der Wirkflächen 13 und 14 sowie 15 und 16 der Zwischenwellendichteinrichtung 7 anliegenden Betriebsdrücke der Lagerkammer 9 und des Bereiches 8 sowie die Dichtelemente 10 und 12 einzustellen.

Über die vorgeschriebene Vorgehensweise zur Axiallagerkraftkompensation im Bereich der Lagereinrichtungen 4 und 5 sind die Axiallagerkräfte im Bereich der Lagereinrichtungen 4 und 5 mit geringen Auswirkungen auf das Gewicht des Strahltriebwerks begrenzbar, ohne dabei einen Treibstoffverbrauch des Strahltriebwerkes 1 zu erhöhen. Darüber hinaus werden auch unerwünschte Temperaturerhöhungen von im Bereich der Lagerkammer 9 vorhandenem Öl vermieden, da die hydraulische Zwischenwellendichteinrichtung 7 im Wesentlichen keine Leckage aufweist. Grundsätzlich ist die Axiallagerkompensation im Bereich der Zwischenwellendichteinrichtung 7 mittels des erfindungsgemäßen Durchmesserverhältnisses zwischen dem Außendurchmesser DA13 und dem Innendurchmesser DI13 sowie zwischen dem Außendurchmesser DA14 und dem Innendurchmesser DI14 mit dem aktuell bei herkömmlich ausgeführten Strahltriebwerken vorhandenen Druckgefälle zwischen der Lagerkammer 9 und dem von den Wellen 2, 3 begrenzten Bereich 8 erzielbar.

Die erfindungsgemäße Einstellung bzw. Dimensionierung des Außendurchmessers DA13 bzw. DA14 im Bereich der Zwischenwellendichteinrichtung 7 bewirkt eine Verbesserung der Dichtwirkung im Bereich der Zwischenwellendichteinrichtung 7, da dadurch die an dem in den Innennutbereich 11 eingeleiteten bzw. eingesprühten Öl bei rotierenden Wellen 2, 3 angreifende Zentrifugalkraft erhöht wird und das Öl in ihrer die Dichtwirkung der Zwischenwellendichteinrichtung 7 zur Verfügung stellenden Lage im Innennutbereich 11 gehalten wird.

### Bezugszeichenliste

- 1: Gasturbine
- 2: Welle, Hochdruckwelle
- 3: Welle, Niederdruckwelle
- 4: Lagereinrichtung der Hochdruckwelle
- 5: Lagereinrichtung der Niederdruckwelle
- 6: Gehäuse
- 7: Zwischenwellendichteinrichtung
- 8: von den Wellen begrenzter Bereich
- 9: Bereich, Lagerkammer
- 10: Dichtelement
- 11: Innennutbereich
- 12: weiteres Dichtelement
- 13: Wirkfläche des Dichtelementes
- 14: Wirkfläche des weiteren Dichtelementes
- 15: Wirkfläche des Dichtelementes
- 16: Wirkfläche des weiteren Dichtelementes
- 17: Nutgrund
- 18: radial äußerer Bereich
- 19: Randbereich des weiteren Dichtelementes
- 20: Kolbenring
- 21: Ölvolumen
- DA13, DA14: Außendurchmesser der Wirkflächen
- DI13, DI14: Innendurchmesser der Wirkflächen
- F4A, F5A: Axialkraftkomponente
- FA13, FA14: Axialkraft
- t: Nuttiefe

## Patentansprüche

1. Gasturbine (1) mit wenigstens zwei koaxial zueinander angeordneten und zumindest bereichsweise als Hohlwellen ausgebildeten Wellen (2, 3), die über Lagereinrichtungen (4, 5) im Bereich eines Gehäuses (6) drehbar gelagert sind, wobei zwischen den Lagereinrichtungen (4, 5) der Wellen (2, 3) eine hydraulische Zwischenwellendichteinrichtung (7) angeordnet ist, die einen ersten innerhalb zumindest einer der Wellen (2, 3) vorgesehenen und von den Wellen (2, 3) begrenzten Bereich (8) gegenüber einem außerhalb der Wellen (2, 3) vorgesehenen Bereich (9) trennt, wobei im von den Wellen (2, 3) begrenzten Bereich (8) ein von im Bereich (9) außerhalb der Wellen wirkenden Betriebsdruck abweichender Betriebsdruck vorliegt, die Zwischenwellendichteinrichtung (7) ein mit einer ersten Welle (2) verbundenes Dichtelement (10) umfasst und sich das Dichtelement (10) über den Umfang der ersten Welle (2) erstreckt sowie einen Innennutbereich (11) mit definierter Nuttiefe (t) aufweist, in den ein mit der zweiten Welle (3) verbundenes weiteres Dichtelement (12) radial eingreift, und wobei der Betriebsdruck in dem von den Wellen (2, 3) begrenzten Bereich (8) in axialer Richtung der Wellen (2, 3) an einander zugewandten Wirkflächen (13, 14) der Dichtelemente anliegt, während der im Bereich (9) außerhalb der Wellen (2, 3) vorliegende Druck in axialer Richtung an zueinander abgewandten Wirkflächen (15, 16) der Dichtelemente (10, 12) angreift, **dadurch gekennzeichnet, dass** ein Verhältnis zwischen die einander zugewandten Wirkflächen (13, 14) begrenzenden Außendurchmessern (DA13, DA14) und diese Wirkflächen (13, 14) begrenzenden Innendurchmessern (DI13, DI14) jeweils größer gleich 1,25 ist.

2. Gasturbine nach Anspruch 1, **dadurch gekennzeichnet, dass** ein Nutgrund (17) des Innennutbereiches (14) in radialer Richtung beabstandet zum radial äußeren Bereich (18) des weiteren Dichtelementes (12) vorgesehen ist.

3. Gasturbine nach Anspruch 2, **dadurch gekennzeichnet, dass** der radial äußere Bereich (18) des weiteren Dichtelementes (12) im Betrieb der Gasturbine (1) im Innennutbereich (11) des Dichtelementes (10) in ein definiertes Ölvolumen (21) eintaucht.

4. Gasturbine nach einem der Ansprüche 1 bis 3, **dadurch gekennzeichnet, dass** das weitere Dichtelement (12) wenigstens bereichsweise ringscheibenförmig ausgebildet ist.

5. Gasturbine nach einem der Ansprüche 1 bis 4, **dadurch gekennzeichnet, dass** die Lagereinrichtungen (4, 5) in einer Lagerkammer (9) angeordnet sind.

6. Gasturbine nach einem der Ansprüche 1 bis 5, **dadurch gekennzeichnet, dass** zwischen den Wellen (2, 3) ein Kolbenring (20) vorgesehen ist, der im Stillstand der Wellen (2, 3) den Bereich (9) außerhalb der Wellen (2, 3) und den von den Wellen (2, 3) begrenzten Bereich (8) auf der von den Wellen (2, 3) begrenzten Bereich (8) zugewandten Seite der Zwischenwellendichteinrichtung (7) trennt.

7. Gasturbine nach einem der Ansprüche 1 bis 6, **dadurch gekennzeichnet, dass** die Wellen (2, 3) mit gleicher Drehrichtung umlaufen.

## Claims

1. Gas turbine (1) having at least two shafts (2, 3) designed as hollow shafts at least in some areas and arranged coaxially relative to one another, which shafts are rotatably mounted using bearing devices (4, 5) in the area of a casing (6), wherein a hydraulic intermediate shaft sealing device (7) is arranged between the bearing devices (4, 5) of the shafts (2, 3), which separates a first area (8) provided inside at least one of the shafts (2, 3) and limited by the shafts (2, 3) from an area (9) provided outside the shafts (2, 3), wherein in the area (8) limited by the shafts (2, 3) an operating pressure prevails that differs from the operating pressure acting in the area (9) outside the shafts, the intermediate shaft sealing device (7) includes a sealing element (10) connected to a first shaft (2), the sealing element (10) extending over the circumference of the first shaft (2), and has an inner groove area (11) with a defined groove depth (t), in which a further sealing element (12) connected to the second shaft (3) radially engages, and wherein the operating pressure is applied in the area (8) limited by the shafts (2, 3) in the axial direction of the shafts (2, 3), to effective areas (13, 14) facing towards one another of the sealing elements, while the pressure prevailing in the area (9) outside the shafts (2, 3) in the axial direction acts on effective areas (15, 16) facing away from one another of the sealing elements (10, 12), **characterized in that** a ratio between the outer diameters (DA 13, DA 14) limiting the effective areas (13, 14) facing towards one another and the inner diameters (DI 13, DI 14) likewise limiting these effective areas (13, 14) is in each case greater than or equal to 1.25.

2. Gas turbine in accordance with Claim 1, **characterized in that** a groove bottom (17) of the inner groove area (14) is provided, in the radial direction, at a distance from the radially outer area (18) of the further sealing element (12).

3. Gas turbine in accordance with Claim 2, **characterized in that** during operation of the gas turbine (1) the radially outer area (18) of the further sealing element (12) dips into a defined oil volume (21) in the inner groove area (11) of the sealing element (10).

4. Gas turbine in accordance with one of the Claims 1 to 3, **characterized in that** the further sealing element (12) is designed at least in some areas as an annular disk.

5. Gas turbine in accordance with one of the Claims 1 to 4, **characterized in that** the bearing devices (4, 5) are arranged inside a bearing chamber (9).

6. Gas turbine in accordance with one of the Claims 1 to 5, **characterized in that** a piston ring (20) is provided between the shafts (2, 3), which separates, while the shafts (2, 3) are stationary, the area (9) outside the shafts (2, 3) and the area (8) limited by the shafts (2, 3) on that side of the intermediate shaft sealing device (7) facing the area (8) limited by the shafts (2, 3).

7. Gas turbine in accordance with one of the Claims 1 to 6, **characterized in that** the shafts (2, 3) rotate in the same rotational direction.

## Revendications

1. Turbine à gaz (1) avec au moins deux arbres (2, 3) conçus au moins partiellement sous forme d'arbres creux, disposés de manière coaxiale l'un par rapport à l'autre et montés moyennant des dispositifs de paliers (4, 5) dans la zone d'un carter (6) de manière à pouvoir tourner, sachant qu'un dispositif hydraulique d'étanchéité d'arbre intermédiaire (7) est disposé entre les dispositifs de paliers (4, 5) des arbres (2, 3), lequel dispositif sépare une première zone (8) prévue à l'intérieur d'au moins un des arbres (2, 3) et délimitée par les arbres (2, 3) d'une autre zone (9) prévue à l'extérieur des arbres (2, 3), sachant que règne, dans la zone (8) délimitée par les arbres (2, 3), une pression de service différente de la pression de service régnant dans la zone (9) à l'extérieur des arbres, sachant que le dispositif d'étanchéité d'arbre intermédiaire (7) comprend un élément d'étanchéité (10) relié à un premier arbre (2), l'élément d'étanchéité (10) s'étendant sur la périphérie du premier arbre (2), et présente une zone de la rainure intérieure (11) ayant une profondeur de rainure (t) définie dans laquelle pénètre radialement un autre élément d'étanchéité (12) relié au second arbre (3), sachant que la pression de service est appliquée dans la zone (8) délimitée par les arbres (2, 3) dans le sens axial des arbres (2, 3) sur des surfaces effectives (13, 14) des éléments d'étanchéité, en face l'une de l'autre, tandis que la pression régnant dans la zone (9) à l'extérieur des arbres (2, 3) s'exerce dans le sens axial sur des surfaces effectives (15, 16) des éléments d'étanchéité (10, 12), opposées l'une à l'autre, **caractérisée en ce qu'**un rapport entre les diamètres extérieurs (DA13, DA14) délimitant les surfaces effectives (13, 14) en face l'une de l'autre et les diamètres intérieurs (DI13, DI14) délimitant ces surfaces effectives (13, 14) est, dans chaque cas, supérieur ou égal à 1,25.

2. Turbine à gaz selon la revendication n° 1, **caractérisée en ce qu'**un fond de rainure (17) de la zone de la rainure intérieure (14) dans le sens radial est espacé de la zone radialement extérieure (18) de l'autre élément d'étanchéité (12).

3. Turbine à gaz selon la revendication n° 2, **caractérisée en ce que**, pendant que la turbine à gaz (1) est en service, la zone radialement extérieure (18) de l'autre élément d'étanchéité (12) est immergée dans un volume d'huile défini (21) dans la zone de la rainure intérieure (11) de l'élément d'étanchéité (10).

4. Turbine à gaz selon une des revendications n° 1 à n° 3, **caractérisée en ce que** l'autre élément d'étanchéité (12) présente au moins partiellement la forme d'un disque annulaire.

5. Turbine à gaz selon une des revendications n° 1 à n° 4, **caractérisée en ce que** les dispositifs de paliers (4, 5) sont disposés dans une chambre de paliers (9).

6. Turbine à gaz selon une des revendications n° 1 à n° 5, **caractérisée en ce qu'**est prévu un segment de piston (20) entre les arbres (2, 3) qui sépare, lors de l'immobilisation des arbres (2, 3), la zone (9) à l'extérieur des arbres (2, 3) de la zone (8) délimitée par les arbres (2, 3) sur le côté du dispositif d'étanchéité d'arbre intermédiaire (7) en face de la zone (8) délimitée par les arbres (2, 3).

7. Turbine à gaz selon une des revendications n° 1 à n° 6, **caractérisée en ce que** les arbres (2, 3) tournent dans le même sens de rotation.
